# NOUVEAU FASCICULE DE BREVET EUROPEEN

(11) **EP 0 899 078 B2**
(45) Date de publication et mention de la décision concernant l'opposition: **18.06.2008**
(45) Mention de la délivrance du brevet: 05.03.2003
(21) Numéro de dépôt: 98402050.3
(22) Date de dépôt: 13.08.1998
(51) Int. Cl.: B29C 47/00, B29C 47/06

(54) **Procédé de fabrication d'un profilé composite en matière plastique et installation pour la mise en oeuvre du procédé**
Verfahren zur Herstellung von einem Verbundwerkstoffprofil aus Kunststoff und Vorrichtung zur Durchführung des Verfahrens
Method of manufacturing a composite profile and apparatus for carrying out the method

(30) Priorité: 29.08.1997 FR 9710787
(43) Date de publication de la demande: 03.03.1999
(73) Titulaire: Alphacan, 78170 La Celle-Saint-Cloud (FR)
(72) Inventeur: Merziger, Joachim, 58000 Nevers (FR); Mestres, Philippe, 58660 Coulanges Les Nevers (FR)
(74) Mandataire: Michardière, Bernard

(56) Documents cités:
- EP-A- 0 737 561
- DE-A- 2 554 239
- DE-A- 2 844 014
- DE-A- 3 616 444
- US-A- 3 764 642
- US-A- 4 383 812
- US-A- 5 516 472
- WILSCHUT J: "INZAMELEN TERUGKEREND MATERIAAL MOET NOG GEOPTIMALISEERD. NIEUWE PVC-KOZIJNEN UIT 'OUD' MATERIAAL" BOUWWERELD, vol. 89, no. 1, 8 janvier 1993, page 47 XP000328393
- PATENT ABSTRACTS OF JAPAN vol. 016, no. 030 (M-1203), 24 janvier 1992 & JP 03 240515 A (SEKISUI CHEM CO LTD), 25 octobre 1991
- "Michaeli, Walter, Extrusionswerkzeuge für Kunstoffe und Kautschuk: ISBN 3-446-15637-2, 1991, Carl Hanser Verlag, Seiten 217, ff, insbesondere Kap. 6.1.2 "Adapterwerkzeuge"

## Description

L'invention est relative à un procédé de fabrication d'un profilé composite en matière plastique, de section transversale quelconque, comportant une couche extérieure ou peau en une première matière et au moins une couche intérieure en une matière différente propre à adhérer à la peau, procédé selon lequel on réalise une coextrusion des matières du profilé.

L'invention concerne notamment la fabrication de profilés à surface prismatique, présentant des faces planes avec des orientations différentes se raccordant suivant des arcs à faible rayon de courbure, le contour de la section transversale du profilé ayant la forme d'un polygone convexe, ou concave, ou convexe et concave. On rappelle qu'un polygone est la figure formée par une suite ordonnée de segments ou cotés, dont chacun a une extrémité commune avec le précédent et le suivant.

L'invention concerne la fabrication de profilés utilisés dans la construction pour les huisseries, châssis de fenêtre, éléments de cloisons, revêtements muraux .

Un procédé de ce genre est connu d'après le document FR-A-2 470 672. Ce procédé utilise une tête de coextrusion complexe comportant deux buses d'extrusion dont les sections transversales ont des formes identiques ou semblables à celles des sections souhaitées pour les différentes matières dans le profilé achevé.

La tête de coextrusion est spécifique d'un profilé déterminé. Il faudra donc disposer d'autant de têtes de coextrusion que de types de profilés à fabriquer.

Or, une tête de coextrusion qui comporte au moins deux buses, et parfois davantage, pour l'entrée de matières différentes est coûteuse, ce qui entraîne des investissements importants lorsque le nombre de sections différentes de profilés à réaliser est élevé.

On sait par ailleurs fabriquer des tubes en matière plastique à paroi composite, comme enseigné par exemple par FR-A-2 455 972, mais ce document ne prévoit pas de fabriquer des profilés à surface prismatique, à paroi composite.

DE-A-25 54239 concerne un procédé de fabrication d'un profilé composite selon lequel on réalise avec un bloc de coextrusion un cordon cylindrique à section pleine et, à la suite du bloc de coextrusion, avec une tête d'extrusion, on réalise des profilés ayant des formes relativement simples. Il n'apparaît pas que le procédé selon ce document permette de réaliser de manière satisfaisante des profilés à section de forme complexe comme ceux utilisés pour des huisseries, ou des châssis de fenêtre.

L'invention a pour but, surtout, de fournir un procédé de fabrication de profilé en matière plastique à paroi composite qui soit d'une plus grande souplesse que les procédés connus à ce jour et qui permette, avec des coûts d'investissement plus réduits, de fabriquer un grand nombre de profilés de sections différentes.

On souhaite également que le procédé permette de combiner au moins deux couches de matière apportant une contribution particulière aux propriétés du profilé final : par exemple un gain économique par utilisation pour la couche intérieure d'une matière moins coûteuse que celle de la peau, et/ou amélioration des caractéristiques d'isolation thermique par utilisation, pour la couche intérieure, d'une matière cellularisée ou moussée à coeur, tout en obtenant les caractéristiques souhaitées en surface (par exemple tenue au rayonnement UV, couleur, dureté de surface...) par une formulation appropriée de la matière de la couche externe ou peau.

Selon l'invention, un procédé de fabrication d'un profilé en matière plastique à paroi composite, du genre défini précédemment, selon lequel :
- dans une première étape, on réalise avec un bloc de coextrusion un cordon cylindrique à section pleine dans lequel la matière de peau forme une couronne extérieure, tandis que la matière de la couche intérieure forme le coeur ;
- et à la suite du bloc de coextrusion on réalise, à l'aide d'une tête d'extrusion simple, une transformation de la section transversale du cordon cylindrique en la section souhaitée pour le profilé, de telle manière que la peau reste présente au moins sur toutes les parties essentielles du profilé achevé,
   est caractérisé par le fait que, pour la fabrication de profilés utilisés dans la construction, pour les huisseries, châssis de fenêtre, éléments de cloisons, revêtements muraux,
- le cordon sortant du bloc de coextrusion présente une couche interne à section transversale sensiblement elliptique de sorte que deux zones opposées de la couche extérieure présentent une épaisseur moindre, ces zones étant appelées à correspondre à des petits côtés de la section transversale du profilé achevé,
- et la tête d'extrusion se compose de plusieurs plaques empilées, chaque plaque comportant une filière définissant une forme de section transversale se rapprochant de plus en plus de la section souhaitée pour le profilé au fur et à mesure que l'on s'éloigne du bloc de coextrusion, pour une transformation progressive de la section transversale du cordon cylindrique en la section souhaitée pour le profilé.

Par l'expression « tête d'extrusion simple », on désigne une tête d'extrusion du genre de celles utilisées pour fabriquer des profilés monomatière.

Selon l'invention, le bloc de coextrusion est facile à réaliser, donc relativement peu coûteux, car il sert à faire un cylindre plein à deux matières, quelle que soit la forme de la section transversale créée par la tête d'extrusion qui suit, cette dernière étant moins coûteuse que les têtes complexes de coextrusion de l'art antérieur.

Ainsi, selon le procédé de l'invention, un changement de forme de la section transversale du profilé, dans des limites déterminées, ne nécessite pas de changement du bloc de coextrusion. Il suffit d'adapter les moyens prévus à la sortie de ce bloc de coextrusion pour assurer la transformation progressive de la section du cordon en la section souhaitée pour le profilé.

De préférence, les coins ou angles vifs sont évités dans la section du cordon car ils engendrent une stagnation de matière.

La section pleine du cordon à la sortie du bloc de coextrusion peut, dans un premier temps, être transformée en une section annulaire, la partie centrale étant remplie par un poinçon, avant d'arriver à la tête d'extrusion.

L'invention est également relative à une installation pour la mise en oeuvre du procédé défini précédemment, cette installation comprenant une première extrudeuse pour la matière de peau, une deuxième extrudeuse pour la matière de la couche intérieure,
- un bloc de coextrusion raccordé aux sorties des deux extrudeuses propre à fournir en sortie un cordon cylindrique à section pleine comportant une couche extérieure et une couche intérieure,
- et à la suite du bloc une tête d'extrusion simple propre à faire passer la section du cordon cylindrique à une section dont la forme est celle souhaitée pour le profilé, tout en assurant la présence d'une épaisseur de peau sur au moins toutes les parties essentielles du profilé,
caractérisée par le fait que :
- le bloc de coextrusion donne en sortie un cordon qui présente une couche interne à section transversale sensiblement elliptique de sorte que deux zones opposées de la couche extérieure présentent une épaisseur moindre, ces zones étant appelées à correspondre à des petits côtés de la section transversale du profilé achevé,
- et la tête d'extrusion se compose de plusieurs plaques empilées, chaque plaque comportant une filière définissant une forme de section transversale se rapprochant de plus en plus de la section souhaitée pour le profilé au fur et à mesure que l'on s'éloigne du bloc de coextrusion, pour une transformation progressive de la section transversale du cordon cylindrique en la section souhaitée pour le profilé.

Avantageusement l'installation comporte, à la suite de la tête d'extrusion, un conformateur, en particulier refroidi, propre à figer la peau du profilé, alors que la couche intérieure peut, selon le cas, subir une expansion à l'intérieur de la peau.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La Figure 1 de ces dessins est un schéma d'une installation selon l'invention pour la fabrication d'un profilé en matière plastique à paroi composite.

La Figure 2 est un schéma en coupe, à plus grande échelle, du conformateur ou banc de calibrage de la Figure 1.

La Figure 3 est une section transversale, à plus grande échelle, du cordon de matière plastique à la sortie du bloc de coextrusion avant son entrée dans l'outillage.

La Figure 4 est une section transversale d'une transformation de la section de la Figure 3.

La Figure 5 est une variante de la section transversale du cordon de matière plastique à la sortie du bloc de coextrusion.

La Figure 6 est une coupe axiale du bloc de coextrusion selon l'invention.

La Figure 7 est une section transversale d'un profilé creux, à section sensiblement rectangulaire, obtenu à partir d'un cordon cylindrique.

La Figure 8 est une section transversale d'une variante du profilé creux de la Figure 7.

La Figure 9 est une section transversale d'un autre profilé obtenu à partir d'un cordon cylindrique ayant une section selon Fig.3.

La Figure 10 est une section transversale d'un autre profilé pouvant servir d'élément de revêtement mural.

La Figure 11, enfin, est une section transversale d'une variante de profilé.

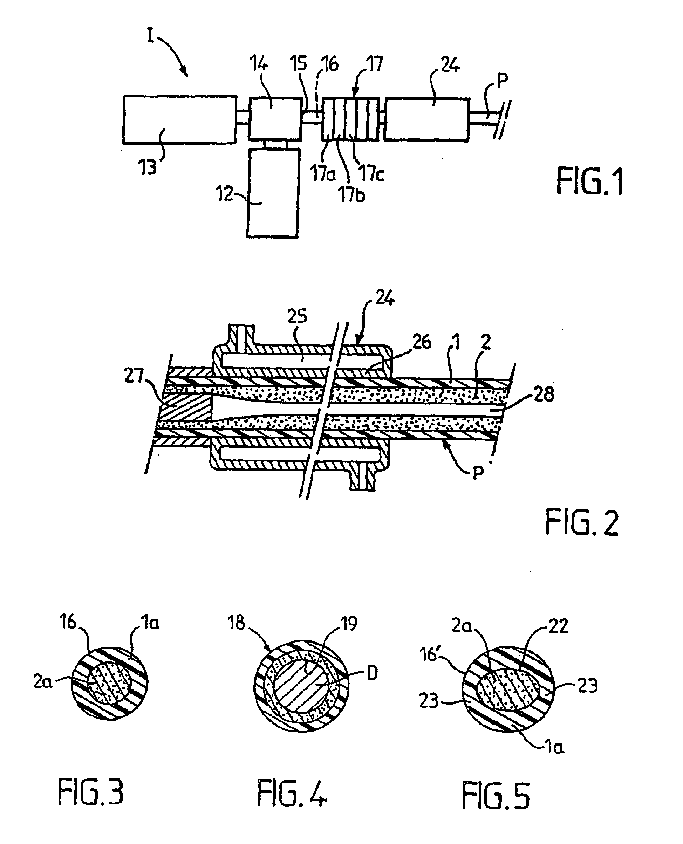

En se reportant aux dessins, notamment à la Figure 1, on peut voir une installation I pour la fabrication d'un profilé P en matière plastique, plus précisément en matière thermoplastique, à paroi composite, de section transversale quelconque.

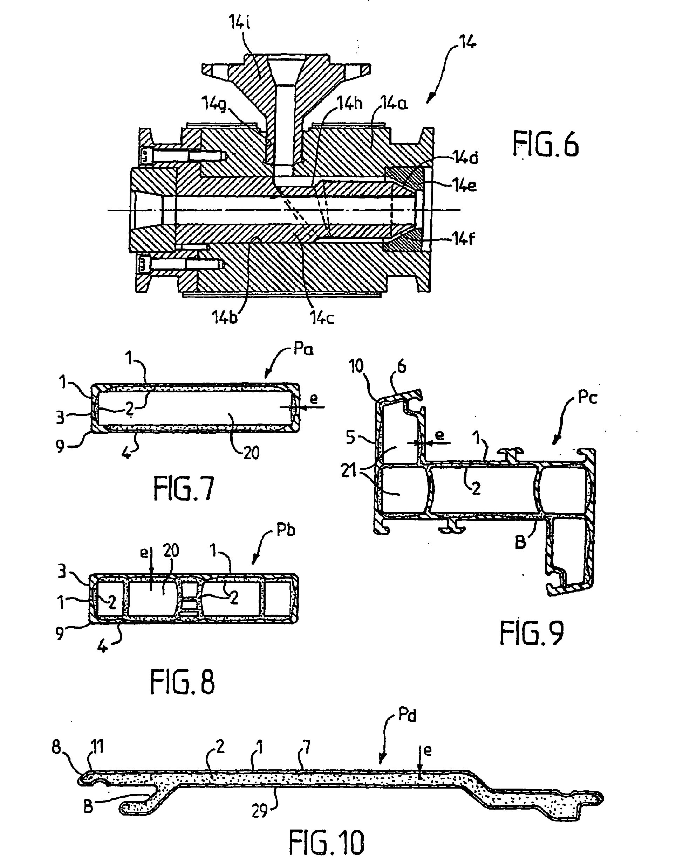

Les Figures 7 à 11 donnent des exemples de sections transversales possibles pour des profilés Pa, Pb Pc, Pd et Pe.

Le profilé à paroi composite comporte une couche extérieure ou peau 1 en une première matière, et au moins une couche intérieure 2 en une deuxième matière propre à adhérer à la peau 1.

Le profilé tel que Pa, Pb, Pc, Pd, Pe est généralement de forme prismatique à section polygonale avec des parties convexes et/ou concaves. Le profilé comporte des faces planes à orientation différente telles que les faces 3 et 4 pour les profilés Pa, Pb, les faces 5 et 6 pour le profilé Pc et les faces 7 et 8 pour le profilé Pd. Ces faces planes se raccordent selon des arcs 9, 10 ou 11 à faible rayon de courbure. Par l'expression "faible rayon de courbure" on désigne des arcs 9, 10 et 11 dont le rayon de courbure moyen est nettement inférieur au rayon du cercle circonscrit à la section transversale du profilé considéré, en particulier inférieur au dixième de ce rayon du cercle circonscrit, mais ceci est nullement limitatif.

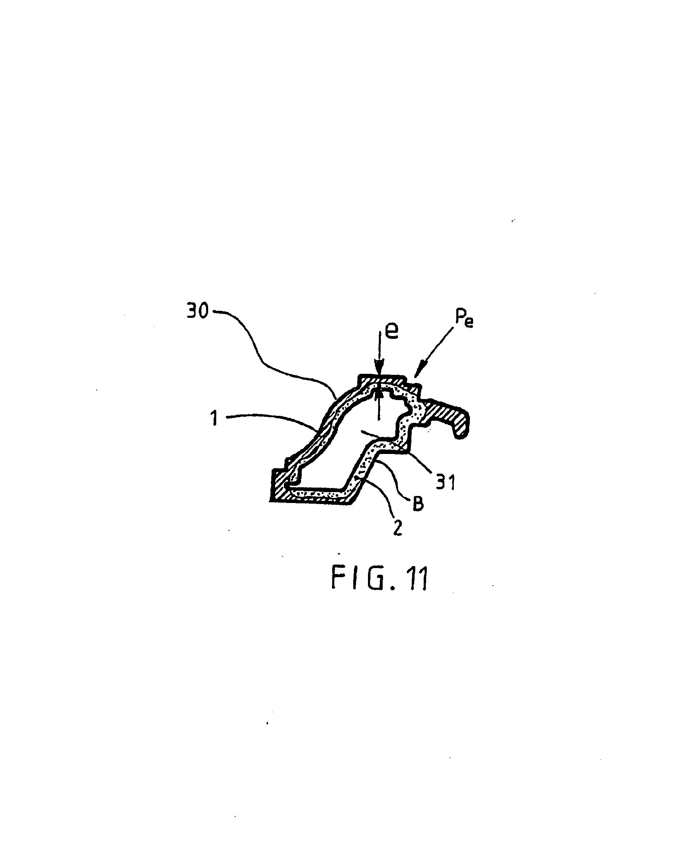

Le profilé tel que Pe (Fig.11) est de forme prismatique avec une face non droite 30 à grand rayon de courbure. Suivant la gamme de profilés voulue, il peut y avoir plusieurs faces non droites.

L'installation I comprend une première extrudeuse 12 pour la matière de peau 1 et une deuxième extrudeuse 13 pour la couche intérieure. Le profilé P sort suivant la direction de l'axe de la deuxième extrudeuse 13. Les axes des deux extrudeuses peuvent être disposés orthogonalement comme illustré sur la Figure 1.

Selon l'invention, un bloc de coextrusion 14 est raccordé aux sorties des deux extrudeuses . Ce bloc 14 fournit à sa sortie 15 un cordon cylindrique composite 16 (Fig.3), à section plaine, par exemple à contour circulaire ou sensiblement circulaire, comportant au moins deux couches, en particulier concentriques, 1a, 2a.

Le bloc 14 , comme visible sur la Figure 6, comprend un corps 14a traversé par un alésage axial 14b dans lequel est monté une buse 14c ayant un canal central alimenté par l'extrudeuse 13 pour former le noyau 2a du cordon composite. L'extrémité de la buse 14c située du côté de la sortie du bloc présente une surface extérieure tronconique 14d définissant , avec une surface tronconique sensiblement parallèle d'une contre-pièce 14e, un passage annulaire 14f tronconique convergeant vers la sortie. Un perçage 14g est prévu dans le corps 14a et débouche dans l'alésage 14b au niveau d'une gorge 14h. Cette gorge 14h se raccorde au passage 14f. Une pièce 14i est engagée dans le perçage 14g pour assurer l'alimentation de ce perçage avec la matière de peau provenant de l'extrudeuse 12.

Le bloc 14 est suivi par une tête d'extrusion simple 17, propre à transformer progressivement la section pleine du cordon cylindrique 16 en une section dont la forme est celle souhaitée pour le profilé, par exemple comme illustré sur les Fig.7 à 11, tout en assurant la présence d'une peau d'épaisseur e sur toutes les parties essentielles du profilé achevé.

Malgré la différence considérable entre la forme de la section du cordon cylindrique 16 et celle de la section du profilé achevé Pa, Pb, Pc, Pd, Pe, on peut obtenir, selon l'invention, un profilé à paroi composite avec une peau 1 au moins sur les parties essentielles du profilé.

Pour arriver à ce résultat surprenant, il a d'abord fallu vaincre le préjugé selon lequel il n'était pas possible de passer, sans rupture importante de la couche extérieure 1a, de la section du cordon cylindrique 16 à celle du profilé achevé, très différente, avec faces planes, ou non planes, à orientations diverses.

Dans une étape intermédiaire, le cordon cylindrique 16 à section pleine peut être transformé, avant d'arriver à la tête d'extrusion 17, en un cordon tubulaire cylindrique 18 (Fig.4) composite à parois coaxiales, la couche intérieure étant formée par un anneau entourant un espace 19 vide de matière plastique, mais rempli par un poinçon métallique D. Ce cordon tubulaire 18 est réalisé de manière classique en disposant l'outil ou poinçon D coaxialement au cordon 16 sur son trajet, à la sortie du bloc 14.

La tête d'extrusion 17 est constituée de préférence par plusieurs plaques 17a,17b,17c... juxtaposées suivant une direction parallèle à la direction d'avance du cordon 16 et du profilé P. Chaque plaque 17a, 17b, 17c... comporte une filière définissant une forme de section se rapprochant de plus en plus de la section souhaitée pour le profilé P au fur et à mesure que l'on s'éloigne du bloc de coextrusion 14. Des poinçons sont disposés convenablement dans les plaques 17a, 17b... lorsque le profilé doit présenter des espaces creux tels que 20 (Fig.7 et 8), 21 (Fig.9) ou 31(Fig.11).

Dans l'installation de l'invention, le bloc de coextrusion 14 peut être conservé sans changement pour des profilés P de sections très diverses. Il suffit de changer l'outillage formé par la tête d'extrusion 17 ou certaines des plaques de cet outillage pour obtenir en sortie, à partir d'un même cordon cylindrique d'entrée 16, le profilé souhaité. Il en résulte une économie substantielle sur les investissements, puisque le bloc 14 peut servir à la fabrication de plusieurs sections de profilés et que les modifications des têtes d'extrusion monomatière 17 sont beaucoup moins onéreuses que des modifications à des têtes de coextrusion complexes.

De plus si les têtes d'extrusion simples sont déjà en possession de l'extrudeur, ce bloc de coextrusion permet de les utiliser pour fabriquer des profilés coextrudés.

Les essais ont montré que lors de la transformation de la section pleine du cordon cylindrique 16 en une section polygonale par exemple telle que celle du profilé Pa, Pb ou Pc des Fig.7, 8, ou 9, l'épaisseur de la peau 1 est variable et irrégulière suivant le contour de la section transversale, comme visible sur le dessin. Notamment, la peau 1 est plus épaisse sur les faces telles que 5 de petite dimension transversale, que sur les faces 6 de grande dimension transversale. Selon l'invention pour réduire cet effet on prévoit un bloc 14 donnant en sortie un cordon cylindrique 16' (Fig.5) dont le contour extérieur est circulaire, alors que le contour 22 de la couche intérieure 2a est sensiblement elliptique avec son grand axe orienté de telle aorte que l'épaisseur de la peau 1a, dans le cordon 16', soit minimale dans des zones opposées telles que 23 auxquelles correspondent les petites faces telles que 5 du profilé achevé.

La tête d'extrusion 17 est suivie d'un conformateur 24, ou banc de calibrage, tel que montré par exemple par le document FR-A-1 498 620, et représenté plus en détail sur la Fig.2.

Le travail de la matière plastique dans les extrudeuses, dans la bloc de coextrusion 14 et la tête d'extrusion 17 est effectué à chaud à une température appropriée à la matière thermoplastique utilisée. Par exemple, pour du PVC, la température dans le bloc 14 et la tête d'extrusion 17 peut se situer aux environs de 190°C. Par contre, le conformateur 24 est maintenu à une température relativement basse, de l'ordre de 15°C, par circulation d'eau de refroidissement dans une chambre annulaire 25 entourant un manchon 26 contre lequel est en contact la peau 1 du profilé P. La peau 1 se fige au contact de la paroi froide 26.

A la sortie de la tête d'extrusion 17, la couche intérieure 2 n'est plus contenue par un outil ou poinçon 27, le volume à l'intérieur du manchon 26 étant totalement dégagé. Selon la matière utilisée pour la couche intérieure 2, cette couche peut subir une expansion à la sortie de la tête d'extrusion 17, dans le conformateur 24, avec changement de densité pour donner une mousse cellulaire . L'expansion de la couche 2, schématisée sur la Figure 2, peut être limitée de telle sorte qu'un espace creux 28 subsiste à l'intérieur du profilé P.

Comme illustré sur les Figures 7 et 8, la couche intérieure 2 en PVC compact peut avoir une épaisseur relativement faible.

Les deux couches 1 et 2 du profilé achevé sont choisies de manière à être compatibles et à apporter une contribution particulière aux propriétés de ce profilé. Par exemple un gain économique peut être obtenu en utilisant pour la couche intérieure 2 une matière moins coûteuse que pour la couche 1, qui donne cependant un bel aspect au profilé, au moins dans ses parties essentielles lorsqu'il est installé. Selon une autre possibilité, susceptible de se combiner avec la précédente, on améliore les caractéristiques d'isolation thermique du profilé en utilisant une matière cellularisée ou moussée à coeur pour la couche intérieure 2 et/ou on obtient des caractéristiques attendues en surface (tenue au rayonnement UV, couleur, dureté de surface...) par formulation appropriée de la matière de la couche externe 1.

Les Figures 9 et 11 illustrent schématiquement des sections de profilés Pc et Pe susceptibles d'être utilisées pour des huisseries ou des châssis dé fenêtre. Des parties non essentielles du profilé, notamment des parties non visibles, telles que les parties B sont dépourvues de peau, la matière de coeur venant à la surface.

Le profilé Pa de la Figure 7 correspond à un caisson creux à section rectangulaire.

Le profilé Pb de la Figure 8 est semblable extérieurement au profilé Pa de Fig.7, mais comporte intérieurement des voiles longitudinaux formant entretoises de rigidification, en la matière de coeur.

Le profilé Pd de la Figure 10 correspond à un élément de revêtement mural prévu pour s'emboîter avec des éléments semblables adjacents ; la grande dimension de l'élément Pc est perpendiculaire au plan de la Figure 10 et est généralement disposée verticalement lors de la mise en place de ce profilé dont la face extérieure visible 7 est située en partie haute de la Figure 10. Avec un tel profilé, par exemple, la peau 1 pourrait partiellement être absente sur la face intérieure 29 qui n'est pas visible lorsque ce profilé est en place.

L'invention n'est bien entendu pas limitée au cas où la peau 1 est réalisée en PVC compact et la couche intérieure 2 en PVC cellulaire, ou PVC à formulation économique. On peut travailler avec d'autres matières, par exemple avec du polyéthylène, du PMMA (poly(méthacrylate de méthyle)), de l'ABS (acrylonitrile de butadiène et de styrène), éventuellement en les combinant entre elles si elles sont compatibles.

L'invention procure un avantage économique considérable puisqu'il n'est pas nécessaire de changer de bloc de coextrusion à chaque changement de section transversale de profilé, que ce bloc de coextrusion est d'une construction relativement peu coûteuse, et que la tête d'extrusion finale est une tête simple et classique telle que celles utilisées pour les profilés monomatière.

## Revendications

1. Procédé de fabrication d'un profilé composite en matière plastique, de section transversale quelconque, comportant une couche extérieure ou peau en une première matière et au moins une couche intérieure en une matière différente propre à adhérer à la peau, procédé selon lequel on réalise une coextrusion des matières du profilé, et
- dans une première étape, on réalise avec un bloc de coextrusion (14) un cordon cylindrique (16,16') à section pleine, dans lequel la matière de peau forme une couronne extérieure (1a) tandis que ta matière de la couche intérieure forme le coeur (2a) ;
- et à la suite du bloc de coextrusion on réalise avec une tête d'extrusion simple (17) une transformation de la section transversale du cordon cylindrique en la section souhaitée pour le profilé, de telle manière que la peau (1) reste présente au moins sur toutes les parties essentielles du profilé achevé (P,Pa,Pb,Pc,Pd,Pe),
**caractérisé par le fait que** , pour la fabrication de profilés utilisés dans la construction, pour les huisseries, châssis de fenêtre, éléments de cloisons, revêtements muraux,
- le cordon (16') sortant du bloc de coextrusion présente une couche interne (2a) à section transversale sensiblement elliptique, (22) de sorte que deux zones opposées de la couche extérieure présentent une épaisseur moindre, ces zones étant appelées à correspondre à des petits côtés (5) de la section transversale du profilé achevé (Pb),
- et la tête d'extrusion (17) se compose de plusieurs plaques empilées (17a, 17b, 17c...), chaque plaque comportant une filière définissant une forme de section transversale se rapprochant de plus en plus de la section souhaitée pour le profilé au fur et à mesure que l'on s'éloigne du bloc de coextrusion (14), pour une transformation progressive de la section transversale du cordon cylindrique en la section souhaitée pour le profilé.

2. Procédé selon la revendication 1, **caractérisé par le fait que** la section pleine du cordon (16) à la sortie du bloc de coextrusion (14) est transformée, dans un premier temps, en une section annulaire (18) avant d'arriver à la tête d'extrusion, la partie centrale (19) étant remplie par un poinçon (D).

3. installation pour la mise en oeuvre du procédé selon la revendication 1 ou 2, comprenant une première extrudeuse pour la matière de peau, une deuxième extrudeuse pour la matière de la couche intérieure,
- un bloc de coextrusion (14) raccordé aux sorties des deux extrudeuses propre à fournir en sortie un cordon cylindrique (16,16') à section pleine, comportant une couche extérieure (1a) et une couche intérieure (2a),
- et à la suite du bloc (4) une tête d'extrusion simple (17) propre à faire passer la section du cordon cylindrique (16,16') à une section dont la forme est celle souhaitée pour le profilé (P,Pa,Pb,Pc,Pd,Pe), tout en assurant la présence d'une épaisseur (e) de peau (1) sur au moins toutes les parties essentielles du profilé, **caractérisée par le fait que** :
- le bloc de coextrusion donne en sortie un cordon (16') qui présente une couche interne (2a) à section transversale sensiblement elliptique (22) de sorte que deux zones opposées de la couche extérieure présentent une épaisseur moindre, ces zones étant appelées à correspondre à des petits côtés (5) de la section transversale du profilé achevé (Pb),
- et la tête d'extrusion (17) se compose de plusieurs plaques empilées (17a, 17b, 17c...), chaque plaque comportant une filière définissant une forme de section transversale se rapprochant de plus en plus de la section souhaitée pour le profilé au fur et à mesure que l'on s'éloigne du bloc de coextrusion (14), pour une transformation progressive de la section transversale du cordon cylindrique en la section souhaitée pour le profilé.

4. Installation selon la revendication 3, **caractérisée par le fait qu'**elle comporte, à la suite de la tête d'extrusion (17), un conformateur (24) propre à figer la peau (1) du profilé, alors que la couche intérieure (2) peut, selon le cas, subir une expansion à l'intérieur de la peau.

## Claims

1. Process for manufacturing a plastic composite profile, of any cross section, having an outer layer or skin made of a first material and at least one inner layer made of a different material suitable for adhering to the skin, according to which process the materials of the profile are coextruded, and
- in a first step, a cylindrical bead (16, 16') of solid section is produced using a coextrusion unit (14), in which bead the skin material forms an outer ring (1 a) while the material of the inner layer forms the core (2a);
- and downstream of the coextrusion unit, the cross section of the cylindrical bead is converted using a simple extrusion head (17) into the desired section for the profile, in such a way that the skin (1) remains present at least on all the essential parts of the completed profile (P, Pa, Pb, Pc, Pd, Pe),
**characterized in that**, for manufacturing profiles used in building, for door frames, window frames, partition elements, wall coverings,
- the bead (16') output by the coextrusion unit has an internal layer (2a) with an approximately elliptical cross section (22) so that two opposed regions (23) of the outer layer have a smaller thickness, these regions being called upon to correspond to short sides (5) of the cross section of the completed profile (Pb),
- and the extrusion head (17) is composed of several stacked plates (17a, 17b, 17c, etc.), each plate having a die defining a cross-sectional shape which increasingly approaches the desired section for the profile on moving further away from the coextrusion unit (14), for a gradual conversion of the cross section of the cylindrical bead into the desired section for the profile.

2. Process according to Claim 1, **characterized in that** the solid section of the bead (16) output by the coextrusion unit (14) is converted, firstly, into an annular section (18) before it reaches the extrusion head, the central part (19) being filled with a mandrel (D).

3. Plant for the implementation of the process according to Claim 1 or 2, comprising a first extruder for the skin material, a second extruder for the material of the inner layer,
- a coextrusion unit (14) connected to the output ends of the two extruders and suitable for providing, as output, a cylindrical bead (16, 16') of solid section, having an outer layer (1a) and an inner layer (2a),
- and downstream of the unit (14), a simple extrusion head (17) suitable for gradually changing the section of the cylindrical bead (16, 16') to a section whose shape is that desired for the profile (P, Pa, Pb, Pc, Pe), while at the same time ensuring that there is a thickness (e) of skin (1) on at least all the essential parts of the profile, **characterized in that**:
- the coextrusion unit outputs a bead (16') having an internal layer (2a) with an approximately elliptical cross section (22) so that two opposed regions of the outer layer have a smaller thickness, these regions being called upon to correspond to short sides (5) of the cross section of the completed profile (Pb),
- and the extrusion head (17) is composed of several stacked plates (17a, 17b, 17c, etc.), each plate having a die defining a cross-sectional shape which increasingly approaches the desired section for the profile on moving further away from the coextrusion unit (14), for a gradual conversion of the cross section of the cylindrical bead into the desired section for the profile.

4. Plant according to Claim 3, **characterized in that** it includes, downstream of the extrusion head (17), a sizing unit (24) suitable for freezing the skin (1) of the profile, while the inner layer (2) may, depending on the case, undergo expansion inside the skin.

## Patentansprüche

1. Verfahren zur Herstellung eines Verbundprofils aus Kunststoff mit beliebigem Querschnitt, das eine äußere Schicht oder Haut aus einem ersten Material und mindestens eine innere Schicht aus einem anderen Material umfasst, welches befähigt ist, an der Haut zu haften, wobei gemäß diesem Verfahren eine Coextrusion der Materialien des Profils durchgeführt wird, und
- in einem ersten Schritt mit einem Coextrusionsblock (14) ein zylindrischer Strang (16,16') mit Vollquerschnitt hergestellt wird, in dem das Material der Haut einen äußeren Ring (1a) und das Material der inneren Schicht den Kern (2a) bildet;
- und nach dem Coextrusionsblock mit einem einfachen Extruderkopf (17) der Querschnitt des zylindrischen Strangs so in den für das Profil gewünschten Querschnitt umgewandelt wird, daß die Haut (1) zumindest an allen wesentlichen Teilen des fertigen Profils (P, Pa, Pb, Pc, Pd, Pe) bestehen bleibt,
**dadurch gekennzeichnet, dass** zur Herstellung von Profilen, die im Bau, für Einfassungen, Fensterrahmen, Wandelemente, Mauerverkleidungen verwendet werden,
- der aus dem Coextrusionsblock kommende Strang (16') eine innere Schicht (2a) mit einem solchen, im wesentlichen elliptischen Querschnitt (22) aufweist, daß zwei gegenüberliegende Bereiche der äußeren Schicht eine geringere Dicke aufweisen, wobei diese Bereiche dazu vorgesehen sind, Schmalseiten (5) des Querschnitts des fertigen Profils (Pb) zu entsprechen,
- und sich der Extruderkopf (17) aus mehreren aneinandergereihten Platten (17a, 17b, 17c ...) zusammensetzt, wobei jede Platte eine Düse aufweist, die eine Form mit einem Querschnitt definiert, der sich immer mehr an den für das Profil gewünschten Querschnitt annähert, je größer die Entfernung von dem Coextrusionsblock (14) wird, um eine progressive Umformung des Querschnitts des zylindrischen Strangs in den gewünschten Profilquerschnitt zu erreichen.

2. Verfahren nach Anspruch 1, **dadurch gekennzeichnet, daß** der Vollquerschnitt des Strangs (16) am Auslaß des Coextrusionsblocks (14) in einem ersten Schritt in einen ringförmigen Querschnitt (18) umgewandelt wird, bevor der Strang zu dem Extruderkopf gelangt, wobei der Innenbereich (19) mit einem Stempel (D) ausgefüllt wird.

3. Vorrichtung zur Durchführung des Verfahrens nach Anspruch 1 oder 2, die umfasst:
- einen ersten Extruder für das Material der Haut und einen zweiten Extruder für das Material der inneren Schicht umfasst,
- einen mit den Auslässen der beiden Extruder verbundenen Coextrusionsblock (14), der dazu geeignet ist, am Auslaß einen zylindrischen Strang (16, 16') mit Vollquerschnitt zu liefern, der eine äußere Schicht (1a) und eine innere Schicht (2a) aufweist,
- und nach dem Block (14) einen einfachen Extruderkopf (17), der geeignet ist, den Querschnitt des zylindrischen Strangs (16, 16') in einen Querschnitt zu überführen, dessen Form der für das Profil (P, Pa, Pb, Pc, Pe) gewünschten Form entspricht, wobei gewährleistet wird, daß die Haut zumindest an allen wesentlichen Teilen des Profils in einer Dicke (e) vorliegt,
**dadurch gekennzeichnet, dass**
- der Coextrusionsblock an seinem Ausgang einen Strang (16') liefert, der eine innere Schicht (2a) mit einem solchen, im wesentlichen elliptischen Querschnitt (22) aufweist, daß zwei gegenüberliegende Bereiche der äußeren Schicht eine geringere Dicke aufweisen, wobei diese Bereiche dazu vorgesehen sind, Schmalseiten (5) des Querschnitts des fertigen Profils (Pb) zu entsprechen,
- und sich der Extruderkopf (17) aus mehreren aneinandergereihten Platten (17a, 17b, 17c ...) zusammensetzt, wobei jede Platte eine Düse aufweist, die eine Form mit einem Querschnitt definiert, der sich immer mehr an den für das Profil gewünschten Querschnitt annähert, je größer die Entfernung von dem Coextrusionsblock (14) wird, um eine progressive Umformung des Querschnitts des zylindrischen Strangs in den gewünschten Profilquerschnitt zu erreichen.

4. Vorrichtung nach Anspruch 3, **dadurch gekennzeichnet, daß** sie nach dem Extruderkopf (17) eine Abkühlvorrichtung (24) aufweist, die geeignet ist, die Haut (1) des Profils fest werden zu lassen, wohingegen die innere Schicht (2) gegebenenfalls im Inneren der Haut expandieren kann.
